Europäisches Patentamt

European Patent Office

Office européen des brevets

(19)

(11) Veröffentlichungsnummer: **0 287 845 B1**

(12) # EUROPÄISCHE PATENTSCHRIFT

(45) Veröffentlichungstag der Patentschrift: **18.12.91**

(21) Anmeldenummer: **88104886.2**

(22) Anmeldetag: **26.03.88**

(51) Int. Cl.5: **B65B 21/04**, B65G 47/26, B65G 47/08

(54) **Anordnung zum Umformen eines mehrspurigen Behälterstroms in mehrere parallele, jeweils durch Einteilelemente voneinander getrennte Behälterreihen.**

(30) Priorität: **30.03.87 DE 3710528**

(43) Veröffentlichungstag der Anmeldung:
**26.10.88 Patentblatt 88/43**

(45) Bekanntmachung des Hinweises auf die
Patenterteilung:
**18.12.91 Patentblatt 91/51**

(84) Benannte Vertragsstaaten:
**AT BE CH DE ES FR GB IT LI NL SE**

(56) Entgegenhaltungen:
**FR-A- 72 844**
**US-A- 3 552 537**

(73) Patentinhaber: **Seitz Enzinger Noll Maschinenbau Aktiengesellschaft**
**Neckarauer Strasse 140-162 Postfach 645**
**W-6800 Mannheim 1(DE)**

(72) Erfinder: **Born, Gerhard**
**Don-Bosco-Strasse 16**
**W-6530 Bingen (Rhein)(DE)**
Erfinder: **Münch, Karl**
**Frankfurter Strasse 29**
**W-6148 Heppenheim (Bergstr.)(DE)**

**Beschreibung**

Die Erfindung bezieht sich auf eine Anordnung zum Umformen eines mehrspurigen, dichtgepackten Behälterstroms in mehrere parallele, jeweils durch Einteilelemente voneinander getrennte Behälterreihen, mit einem zum Anfördern der Behälter dienenden Zuförderer, mit einem Abförderer, der durch die in seiner Förderrichtung verlaufenden parallel und in Abstand zueinander angeordneten Einteilelemente in mehrere Gassen für jeweils eine Behälterreihe unterteilt ist und eine im Vergleich zur Förderbreite des Zuförderers größere Breite besitzt, sowie mit einer dem Abförderer vorausgehenden Übergangsstrecke, die durch in Förderrichtung liegende obere Längen mehrerer quer zu dieser Förderrichtung nebeneinander angeordneter Förderbänder gebildet ist und in der die Behälter des mehrspurigen Behälterstromes auf die einzelnen Gassen verteilt werden.

Unter "mehrspuriger, dichtgepackter Behälterstrom" ist im Sinne der Erfindung ein Behälterstrom zu verstehen, in welchem die Behälter in mehreren Spuren bzw. Reihen entweder tatsächlich dichtgepackt, d. h. An ihren Umfangsflächen gegeneinander anliegend vorhanden sind oder aber zumindest von der Ausbildung des diesen Behälterstrom fördernden Elementes her die Möglichkeit besteht, daß sich die Behälter auch unterschiedlicher Reihen bzw. Spuren an ihren Umfangsflächen unmittelbar berühren können. Im Gegensatz hierzu sind im Sinne der Erfindung unter "voneinander getrennten Behälterreihen" solche zu verstehen, bei denen die Behälter jeder Behälterreihe jeweils von einer am Abförderer gebildeten Gasse aufgenommen und die Behälter einer Gasse durch ein Einteilelement von den Behältern einer benachbarten Gasse getrennt sind.

Eine Anordnung der eingangs geschilderten Art dient insbesondere dazu, um aus einem angeförderten Behälterstrom die für eine Behältereinpackmaschine erforderlichen Behälterreihen zu bilden. Bei einer bekannten, für diesen Zweck vorgesehenen Anordnung (DE-PS 12 67 592) werden die Behälter als einspuriger Behälterstrom einem Behälterstautisch zugeführt, welcher von mehreren nebeneinander angeordneten und endlos umlaufend angetriebenen Förderbändern gebildet ist und dessen Förderrichtung senkrecht zur Förderrichtung des Zuförderers verläuft, so daß die Behälter bei der Übergabe an den Behälterstautisch eine Bewegungsänderung von 90° erfahren. Die den Behälterstautisch bildenden Förderbänder sind über die gesamte Länge des Stautisches parallel zueinander angeordnet, so daß auch einander benachbarte Förderbänder über die gesamte Länge des Behälterstautisches einen gleichbleibenden, sehr geringen Abstand voneinander aufweisen.

Nach der Übergabe der Behälter von dem Zuförderer formieren sich diese auf dem Behälterstautisch zu einem mehr oder weniger dichtgepackten Behälterstrom, in welchem auch die jeweils nachfolgenden Behälter unter Druck gegen die vorausgehenden Behälter anliegen und welcher durch zwei seitliche, die Förderbreite des Behälterstautisches bestimmende Führungsgeländer begrenzt ist. Nach dem Passieren einer Übergangsstrecke, in deren Verlauf sich die Förderbreite des Behälterstautisches vergrößert, werden die Behälter in mehrere am Ende des Behälterstautisches gebildete und jeweils durch Einteilelemente bzw. Einteilwände voneinander getrennte und parallel zueinander angeordnete Gassen hineinbewegt und bilden somit mehrere voneinander getrennte Behälterreihen. Die Anzahl der Gassen ist gleich der Anzahl der Spuren, die der Behälterstrom vor dem Erreichen der Übergangsstrecke bzw. während des Passierens dieser Übergangsstrecke aufweist. Da die Behälter in dem mehr oder weniger dicht gepackten Behälterstrom aufgrund ihres kreisförmigen Umfangsquerschnittes zwangsläufig eine in etwa wabenartige Formation einnehmen, bei der jeder Behälter einer Spur gegenüber den Behältern einer benachbarten Spur versetzt ist, ist es für das Einschleusen der Behälter in die einzelnen Gassen bei der bekannten Anordnung unbedingte Voraussetzung, daß die Behälter zumindest der äußeren Spuren des mehrspurigen Behälterstromes durch nachfolgende Behälter zur Seite gedrückt sowie auch solche Behälter, die nicht schon rein zufällig nach dem Passieren der Übergangsstrecke in eine Gasse einlaufen, durch den Druck der nachfolgenden Behälter in die nächstliegende Gasse eingelenkt bzw. eingefädelt werden.

Ein wesentlicher, funktionsbedingter Nachteil der bekannten Anordnung besteht somit zunächst einmal darin, daß sich Stöße zwischen den einzelnen Behältern insbesondere auch im Bereich der Übergangsstrecke sowie beim Einfädeln in die einzelnen Gassen und eine hieraus resultierende hohe Lärmbelastung nicht vermeiden lassen. Nachteilig ist bei der bekannten Anordnung aber auch, daß durch das Einfädeln der Behälter unter Druck in die einzelnen Gassen nicht auszuschließen ist, daß sich mehrere Behälter am Einlauf beispielsweise einer Gasse derart gegenseitig verkeilen, daß ein Einfädeln der Behälter in diese Gasse nicht möglich ist. Aus den vorgenannten Gründen ist auch die mit der bekannten Anordnung erzielbare Leistung begrenzt.

Aufgabe der Erfindung ist es, eine Anordnung der eingangs geschilderten Art so weiterzubilden, daß eine Umformung des angeförderten Behälterstromes in die voneinander getrennten Behälterreihen stoß- und druckfrei erfolgt.

Zur Lösung dieser Aufgabe ist eine Anordnung erfindungsgemäß so ausgebildet, daß im Verlauf der Übergangsstrecke die diese bildenden Förderbänder fächerartig derart auseinanderlaufen, daß der seitliche Abstand zwischen den oberen Längen benachbarter Förderbänder mit zunehmendem Abstand von dem Zuförderer zunimmt, und daß der maximale Wert dieser Abstände jedoch jeweils kleiner ist als der Durchmesser der Behälter bzw. die Breite der am Abförderer gebildeten Gassen.

Durch den fächerartigen Verlauf der Förderbänder werden die der Übergangsstrecke zugeführten Behälter, insbesondere Flaschen, im Verlauf der Übergangsstrecke nicht nur in Förderrichtung bewegt, sondern diesen Behältern wird durch die Förderbänder auch eine quer zur Förderrichtung verlaufende Bewegungskomponente aufgeprägt, so daß allein durch die die Übergangsstrecke bildenden Förderbänder und nicht durch den Druck nachfolgender Behälter der Behälterstrom auf die zum Einführen bzw. Einfädeln in die Gassen des Abförderers benötigte Breite aufgespreizt wird. Bei der erfindungsgemäßen Anordnung erfolgt somit das Aufteilen des zugeführten Behälterstromes auf die einzelnen, am Abförderer gebildeten Gassen druck- und stoßfrei sowie vor allem auch geräuscharm. Insbesondere ist es bei der erfindungsgemäßen Anordnung auch möglich, durch entsprechende Wahl der Fördergeschwindigkeit der Übergangsstrecke bezogen auf die Fördergeschwindigkeit des Zuförderers im Verlauf der Übergangsstrecke einen völlig aufgelockerten Behälterstrom in der Form zu erreichen, daß die einzelnen Behälter dieses Behälterstromes einen ausreichend großen, Stöße zwischen den Behältern vermeidenden Abstand voneinander aufweisen.

Da es bei der erfindungsgemäßen Anordnung zum Aufspreizen des Behälterstromes nicht erforderlich ist, daß sich die Behälter gegenseitig berühren, d.h. insbesondere auch nacheilende Behälter gegen vorauseilende Behälter auflaufen, sondern der angeförderte Behälterstrom im Verlauf der Übergangsstrecke deren Förderbänder kontinuierlich auseinandergespreizt wird und die einzelnen Behälter kontinuierlich in die Gassen des Abförderers einlaufen, ist mit der erfindungsgemäßen Anordnung auch eine wesentlich höhere Leistung (je Zeiteinheit verarbeitete Behälter) möglich. Hierzu trägt auch bei, daß bei der erfindungsgemäßen Anordnung die Behälter bereits über den Zuförderer als mehrspuriger Behälterstrom zugeführt werden.

Grundsätzlich ist es bei der erfindungsgemäßen Anordnung möglich, daß die die Übergangsstrecke bildenden Förderbänder bereits Bestandteil des Zuförderers sind. Bei einer bevorzugten Ausführung der Erfindung sind jedoch die die Übergangsstrecke bildenden Förderbänder von dem Zuförderer unabhängige Elemente, wobei in dem Fall, in dem auch der Zuförderer von mehreren, nebeneinander angeordneten Förderbändern gebildet ist, die Anzahl der die Übergangsstrecke bildenden Förderbänder größer ist als die Anzahl der Förderbänder des Zuförderers.

Bei einer besonders bevorzugten Ausführungsform ist zumindest die Übergangsstrecke von einer Vielzahl sehr schmaler Förderbänder gebildet. Diese Ausführung hat den Vorteil, daß auch bei einer Anordnung, bei der die am Abförderer gebildeten Gassen in ihrer Breite zur Anpassung an Behälter unterschiedlichen Durchmessers einstellbar sind, unabhängig von der jeweils eingestellten Breite dieser Gassen eine optimale Arbeitsweise sichergestellt ist, da wegen der sehr schmalen Ausbildung der Förderbänder der Übergangsstrecke zumindest jeweils wenigstens ein derartiges Förderband am Anfang jeder Gasse zwischen den dortigen, diese Gasse begrenzenden Einteilelementen liegt.

Bei der erfindungsgemäßen Anordnung setzen sich weiterhin die die Übergangsstrecke bildenden Förderbänder vorzugsweise in den Bereich des Abförderers fort, d.h. diese Förderbänder bilden zumindest auf einer auf die Übergangsstrecke folgenden Teillänge des Abförderers auch dessen Förderbänder.

Weiterbildungen der Erfindung sind Gegenstand der Unteransprüche.

Die Erfindung wird im folgenden anhand der Figuren an Ausführungsbeispielen näher erläutert. Es zeigen:

| | |
|---|---|
| Fig. 1 | in vereinfachter Darstellung und in Draufsicht eine Ausführungsform der erfindungsgemäßen Anordnung zusammen mit den den angeförderten Behälterstrom sowie die Behälterreihen bildenden Behälter; |
| Fig. 2 | eine Darstellung wie Fig. 1, jedoch ohne die Behälter; |
| Fig. 3 | in ähnlicher Darstellung wie Fig. 2, eine zweite Ausführung der Erfindung; |
| Fig. 4 und 5 | in ähnlicher Darstellung wie in den Fig. 1 und 2 eine dritte Ausführungsform der Erfindung; |
| Fig. 6 | in ähnlicher Darstellung wie Fig. 1 eine vierte Ausführungsform der Erfindung; |
| Fig. 7 | in ähnlicher Darstellung wie Fig. 2 eine fünfte Ausführungsform der Erfindung; |
| Fig. 8 | in Einzeldarstellung und in Draufsicht eine Führungsplatte zur Verwendung bei der Ausführung nach Fig. 7; |
| Fig. 9 | einen Schnitt entsprechend der |

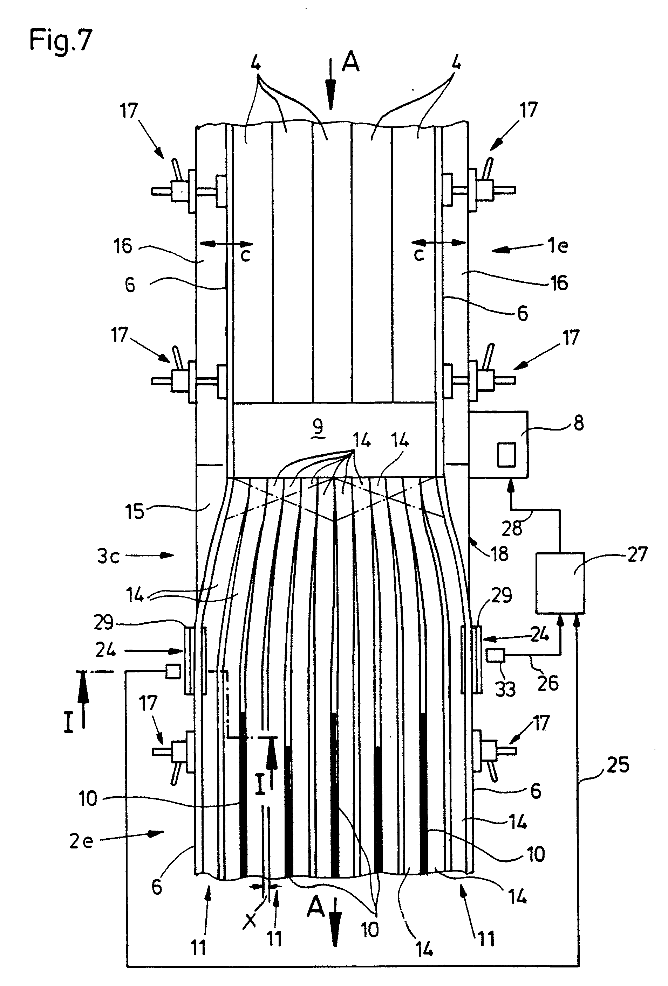

Linie I - I der Fig. 7.

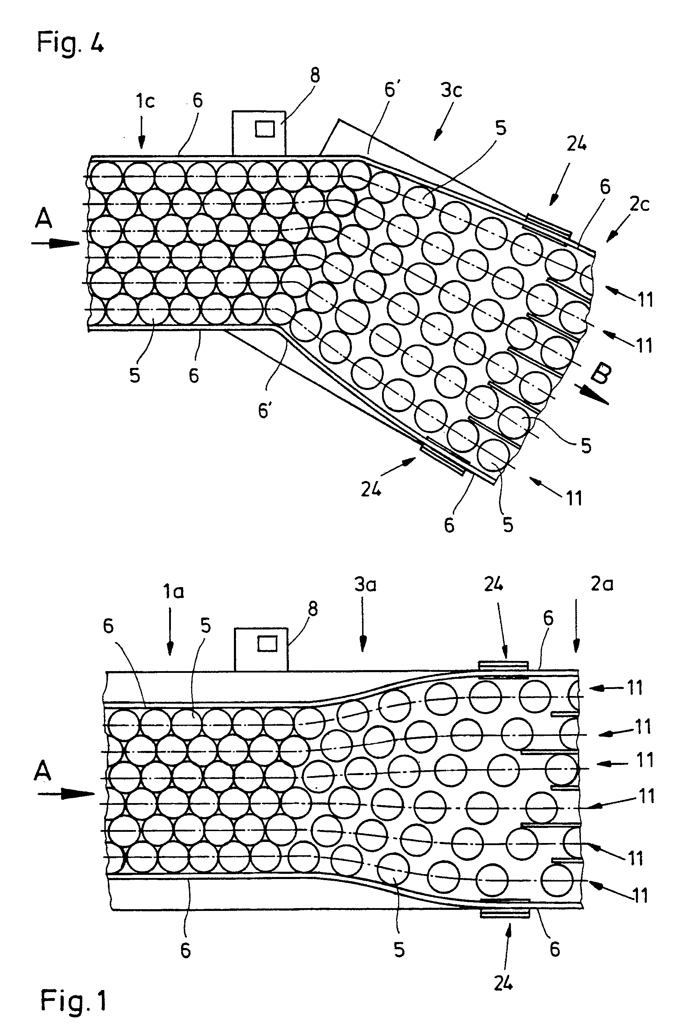

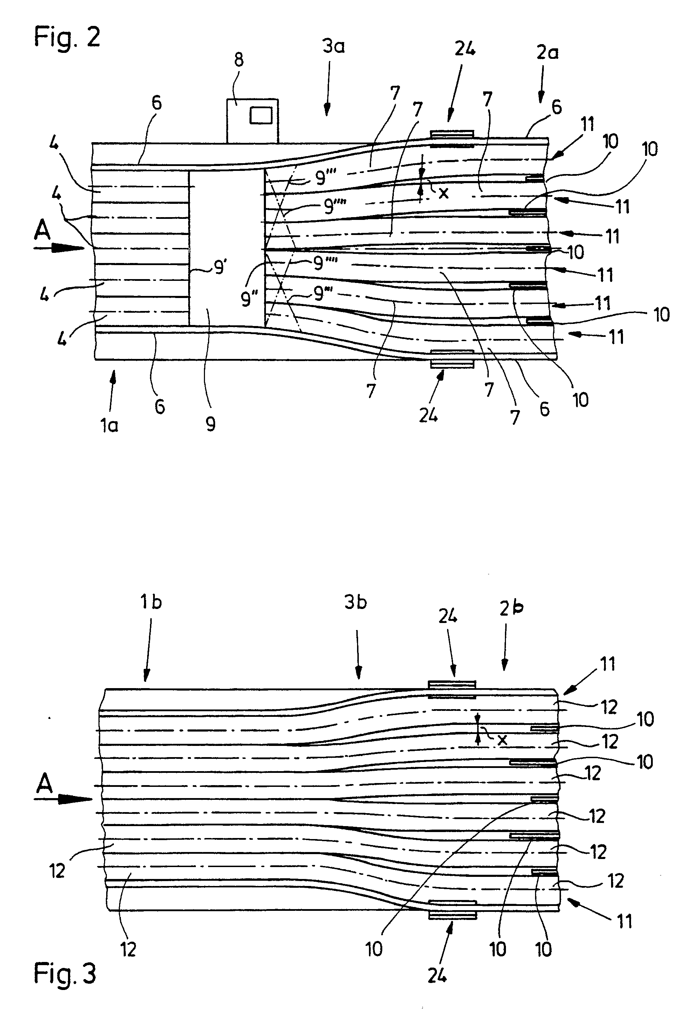

Die in den Figuren 1 und 2 dargestellte Ausführungsform weist einen Zuförderer 1a, einen Abförderer 2a sowie eine Übergangsstrecke 3a auf, welche letztere zwischen dem Ende des Zuförderers 1a und dem Anfang des Abförderers 2a gebildet ist.

Wie insbesondere die Figur 2 zeigt, besteht der Zuförderer 1a im wesentlichen aus vier jeweils in sich geschlossenen und endlos umlaufend angetriebenen Förderbändern bzw. Scharnierbandketten 4, die mit ihren oberen, sich in Förderrichtung A des Zuförderers 1a erstreckenden Länge quer zur Förderrichtung A unmittelbar angrenzend nebeneinander angeordnet sind und mit diesen oberen Längen eine im wesentlichen horizontale Standfläche für aufrechtstehende Flaschen bzw. Behälter 5 bilden. Die Scharnierbandketten 4 sind mit Hilfe eines Antriebs 8 umlaufend angetrieben und am Anfang sowie Ende des Zuförderers 1a, d. h. dort wo dieser Zuförderer 1a in die Übergangsstrecke 3a übergeht, über nicht näher dargestellte Umlenkrollen bzw. -räder geführt.

Quer zur Förderrichtung A ist der Zuförderer 1a jeweils beidseitig durch ein Führungsgeländer 6 begrenzt. Durch den Abstand der beiden Führungsgeländer 6 ist die Förderbreite des Zuförderers 1a festgelegt.

Im Bereich der Übergangsstrecke 3a ist die auch wiederum im wesentlichen horizontale Standfläche für die Behälter 5 von den oberen Längen von insgesamt sechs Scharnierbandketten 7 gebildet, wobei sich bei dieser Ausführungsform die Scharnierbandketten 7 in dem Bereich des Abförderers 2a fortsetzen und mit ihren oberen Längen auch dort die Standflächen für die Behälter 5 bilden. Die Scharnierbandketten 7 sind ebenfalls in sich geschlossen und endlos umlaufend angetrieben, wofür die Scharnierbandketten 7 am Übergangsbereich zwischen dem Zuförderer 1a und der Übergangsstrecke 3a sowie an dem in den Figuren 1 und 2 nicht mehr dargestellten rechten Ende des Abförderers 2a jeweils über Umlenkrollen bzw. -räder geführt sind, von denen die am Ende des Abförderers 2a vorgesehenen Umlenkräder durch einen dem Antrieb 8 entsprechenden Antrieb derart angetrieben werden, daß sich die Scharnierbandketten 7 mit ihren jeweils oberen Längen in Förderrichtung A bewegen.

Am Übergangsbereich zwischen dem Zuförderer 1a sowie der Übergangsstrecke 3a ist ein ortsfestes Staublech 9 angeordnet, welches mit seiner oberen, horizontalen Fläche in etwa niveaugleich mit den von den Scharnierbandketten 4 und 7 gebildeten Standfläche liegt und am Übergangsbereich zwischen dem Zuförderer 1a und der Übergangsstrecke 3a eine ortsfeste Standfläche für die Behälter 5 bildet. Bei der dargestellten Ausführungsform liegt das Staublech 9 mit seiner in Förderrichtung A vorderen Kante 9' sowie mit seiner in Förderrichtung A hinteren Kante 9" jeweils senkrecht zur Förderrichtung A. Die hintere Kante des Staubleches 9 kann auch von zwei schräg zur Förderrichtung A verlaufenden Abschnitten gebildet sein, die in der Mitte der Förderbreite der Übergangsstrecke 3a ineinander übergehen und einen Winkel miteinander einschließen, der sich entweder entgegen der Förderrichtung A oder aber in der Förderrichtung A öffnet, wie dies in der Figur 2 bei 9‴ bzw. 9⁗ mit unterbrochenen Linien angedeutet ist.

Wie die Figur 2 weiterhin zeigt, sind die beiden Führungsgeländer 6 im Bereich der Übergangsstrecke 3a jeweils symmetrisch zu der in Förderrichtung A verlaufenden Mittelachse der Übergangsstrecke 3a nach außen geführt, so daß im Verlauf der Übergangsstrecke 3a und in Förderrichtung A der Abstand zwischen den beiden Führungsgeländern 6 zunimmt und diese auch die seitliche Begrenzung des Abförderers 2a bildenden Führungsgeländer 6 im Bereich des Abförderers 2a einen größeren Abstand voneinander besitzen als im Bereich der Zuförderers, d. h. die Breite des Abförderers 2a größer ist als die Breite des Zuförderers 1a.

Wie die Figur 2 ferner zeigt, sind die Scharnierbandketten 7 mit ihren oberen Längen im Bereich der Übergangsstrecke 3a durch nicht näher dargestellte Führungsmittel derart geführt, daß die oberen Längen der Scharnierbandketten 7 ausgehend von dem Übergangsbereich zwischen dem Zuförderer 1a und der Übergangsstrecke 3a, d. h. ausgehend von dem Staublech 9 wiederum spiegelsymmetrisch zu der in Förderrichtung A liegenden Mittelachse fächerartig derart auseinanderstreben bzw. -laufen, daß die oberen Längen benachbarter Scharnierbandketten 7 in Förderrichtung A jeweils einen zunehmenden Abstand x voneinander besitzen, wobei diese Abstände x am Übergangsbereich zwischen der Übergangsstrecke 3a und dem Abförderer 2a, also dort, wo die Abstände x ihren maximalen Wert besitzen, auf jeden Fall wesentlich kleiner sind als der Durchmesser bzw. die Standfläche der Behälter 5.

Am Abförderer 2a, an welchem die oberen Längen der Scharnierbandketten 7 weiterhin den Abstand x voneinander aufweisen, sind zwischen den beiden Führungsgeländern 6 bei der dargestellten Ausführungsform insgesamt fünf Zwischengeländer bzw. Einteilwände 10 vorgesehen, die jeweils parallel zueinander und im Abstand voneinander in Förderrichtung A verlaufen und den Abförderer 2a in sechs Gassen 11 mit jeweils gleicher Breite unterteilen, von denen die beiden äußeren Gassen 11 von einem der Führungsgeländer 6 und einer Einteilwand 10 und die inneren Gassen 11 von Einteilwänden 10 seitlich begrenzt sind. Die Standflächen für die Behälter 5 in den Gassen 11 sind jeweils von der oberen Länge einer Scharnierbandkette 7 gebildet. Weiterhin sind die Einteilwände 10 bei der in den Fig. 1 und 2 dargestellten Ausführung so ausgebildet, daß ausgehend von einer Seite des Abförderers 2a bzw. ausgehend von einem Führungsgeländer 6 jede zweite Einteilwand mit ihrem in Förderrichtung A vorderen Ende entgegen der Förderrichtung A über die übrigen Einteilwände 10 vorsteht. Da die oberen Längen der Scharnierbandketten 7 sowohl am Übergangsbereich zwischen dem Zuförderer 1a und der Übergangsstrecke 3a, als auch im Bereich des Abförderers 2a in Förderrichtung liegen und im Bereich der Übergangsstrecke 3a in der bereits beschriebenen Weise fächerartig auseinanderlaufen, besitzen diese oberen Längen im Bereich der Übergangsstrecke einen flachen S-förmigen Verlauf.

Wie in der Figur 1 dargestellt ist, werden die Behälter 5 über den Zuförderer 1a als dichtgepackter, mehrspuriger Behälterstrom zugeführt, in welchem die Behälter 5 zumindest am Ende des Zuförderers 1a nicht nur mit ihrer Umfangsfläche unmittelbar gegeneinander anliegen, sondern auch wabenartig derart gegeneinander versetzt sind, daß jeder Behälter 5 einer Reihe bzw. Spur des mehrspurigen Behälterstroms gegenüber den Behältern einer benachbarten Reihe dieses Behälterstroms um den halben Behälterdurchmesser versetzt ist. Durch die Verwendung des Staubleches 9 wird diese Formation der Behälter 5 am Ende des Zuförderers 1a auf jeden Fall sichergestellt, da die auf dem Staublech 9 aufstehenden Behälter erst durch nachfolgende Behälter weitergefördert bzw. weitergeschoben werden.

Da die Scharnierbandketten 7 bevorzugt mit einer etwas größeren Geschwindigkeit umlaufen als die Scharnierbandketten 4, bilden die Behälter 5 nach dem Passieren des Staubleches 9 an der Übergangsstrecke 3a einen aufgelockerten Behälterstrom, der in seiner Formation auch noch durch den Verlauf beeinflußt werden kann, welchen die in Förderrichtung hintere Kante 9″, 9‴ bzw. 9⁗ des Staubleches 9 aufweist. Durch den beschriebenen Verlauf, den die oberen Längen der Scharnierbandketten 7 im Bereich der Übergangsstrecke 3 besitzen, werden die Behälter 9 in der Übergangsstrecke 3a auch quer zur Förderrichtung A nach außen bewegt, und zwar die äußeren Behälter 5 stärker als die inneren Behälter 5. Der aufgelockerte Behälterstrom wird somit auch in der Breite gespreizt, so daß sich die Behälter 5 dann schließlich stoßfrei in die Gassen 11 des Abförderers 2 hineinbewegen und sich dort zu mehreren, d. h. bei der dargestellten Ausführungsform zu sechs parallelen Behälterreihen formieren. Durch die Auflockerung und Spreizung des Behälterstromes an der Übergangsstrecke 3a wird somit eine stoßfreie, drucklose und vor allem auch geräuscharme Umformung des dichtgepackten Behälterstromes in die Behälterreihen der Gassen 11 erreicht. Durch die Verwendung des Staubleches 9 ist sichergestellt, daß auch bei evtl. Lücken im angeförderten Behälterstrom zumindest am Ende des Zuförderers 1a ein dichtgepackter Behälterstrom vorhanden ist, also dort auch bei ev. kleineren Lücken im angeförderten Behälterstrom jeweils die gleichen Verhältnisse vorliegen, die zu einer optimalen Verteilung der Behälter 5 auf die einzelnen Gassen 11 führen.

Die in der Figur 3 dargestellte Ausführung unterscheidet sich von der Ausführung nach den Figuren 1 und 2 im wesentlichen nur dadurch, daß anstelle von gesonderten Scharnierbandketten 4 und 7 für den Zuförderer 1b, den Abförderer 2b und die dazwischenliegende Übergangsstrecke 3b gemeinsame Scharnierbandketten 12 verwendet sind, die sich mit ihren oberen, wiederum die Standflächen für die Behälter 5 bildenden Längen vom Zuförderer 1b bis in den Abförderern 2b erstrecken. Im Verlauf der Übergangsstrecke 3b sind die oberen Längen der Scharnierbandketten 12 auch bei dieser Ausführungsform wiederum fächerartig derart auseinandergeführt, daß sich der Abstand x zwischen den oberen Längen zweier benachbarter Scharnierbandketten 12 in Förderrichtung A vergrößert und die oberen Längen der Scharnierbandketten 12 in ihrem die Übergangsstrecke 3a bildenden Bereich den flachen S-förmigen Verlauf aufweisen, der für die Scharnierbandketten 7 im Bereich der Übergangsstrecke 3a bereits beschrieben wurde.

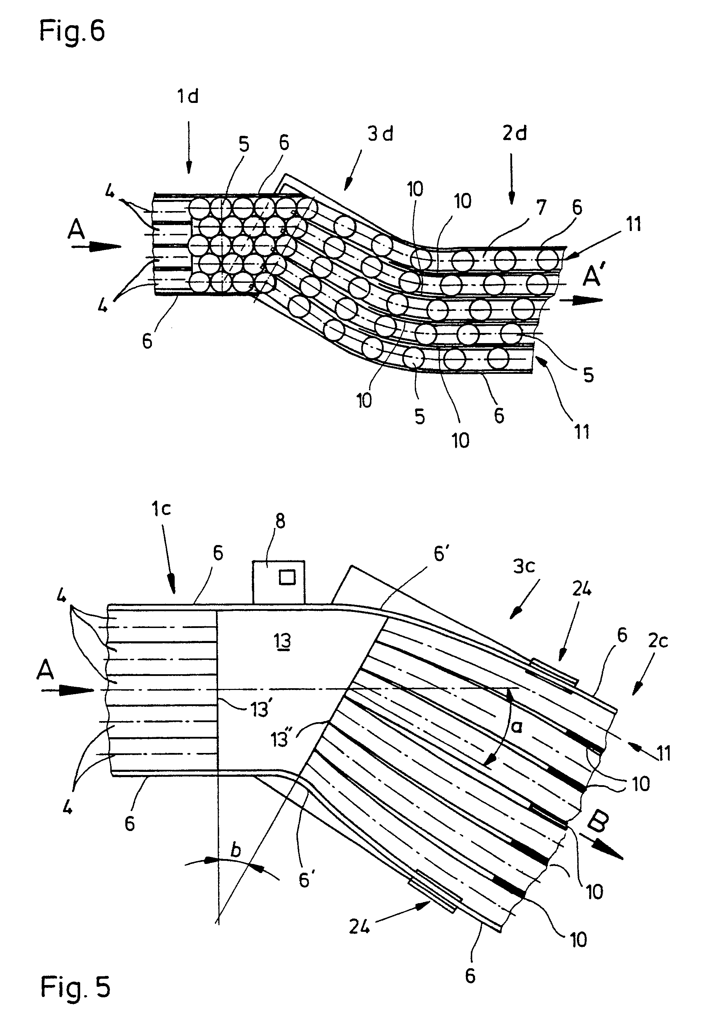

Die Figuren 4 und 5 zeigen eine Ausführungsform, die sich von der Ausführungsform nach den Figuren 1 und 2 im wesentlichen nur dadurch unterscheidet, daß die Übergangsstrecke 3c sowie der Abförderer 2c bei dieser Ausführungsform nicht in Linie an den Zuförderer 1c anschließen, sondern die Förderrichtung B der Übergangsstrecke 3c sowie des Abförderers 3c mit der Förderrichtung A des Zuförderers 1c einen Winkel a einschließen, der bei der dargestellten Ausführungsform größer als 40°, jedoch kleiner als 90° ist und sich in beide Förderrichtungen A und B öffnet.

Am Übergangsbereich zwischen dem Zuförderer 1c und der Übergangsstrecke 3c ist bei dieser Ausführungsform ein Staublech 13 vorgesehen, welches hinsichtlich seiner Funktion und Ausbildung grundsätzlich dem Staublech 9 der Figuren 1 und 2 entspricht, wobei das Staublech 13 allerdings einen im wesentlichen trapezförmigen Zuschnitt derart aufweist, daß die Verlängerungen der in Förderrichtung vorderen Kante 13′ und der in Förderrichtung hinteren Kante 13″ einen Winkel b miteinander einschließen, der gleich dem Winkel a ist, so daß die Kante 13″ senkrecht zur Förderrich-

tung B liegt. Entsprechend der Anordnung, die der Zuförderer 1c und der Abförderer 2c bzw. die Übergangsstrecke 3c relativ zueinander aufweisen, sind auf die beiden Führungsgeländer 6 bei 6' gebogen ausgebildet. Ansonsten stimmt die Ausführung nach den Figuren 4 und 5 hinsichtlich ihrer Konstruktion und Funktion mit der Ausführung nach den Figuren 1 und 2 überein, so daß auch in den Figuren 4 und 5 wiederum jeweils die gleichen Bezugzeichen wie in den Figuren 1 und 2 für solche Elemente verwendet sind, die den Elementen nach den Figuren 1 und 2 entsprechenden. Eine Besonderheit liegt bei der Ausführungsform nach den Figuren 4 und 5 gegenüber den Ausführungsformen nach den Figuren 1 - 3 insofern noch vor, als durch die sich in einem Winkel an den Zuförderer 1c anschließende Übergangsstrecke 3c die Breite dieser Übergangsstrecke zwangsläufig größer ist als die Förderbreite des Zuförderers 1c, was auch durch die im Vergleich zur Kante 13' größere Länge der Kante 13" dokumentiert wird, so daß sich der Behälterstrom bereits nach dem Passieren des Staubleches 13 seitlich auffächern kann.

Eine ähnliche Ausführung wie in den Figuren 4 und 5 ist in der Figur 6 dargestellt, wobei bei dieser Ausführung der Zuförderer 1d nur vier Scharnierbandketten 4 aufweist und der Abförderer 2d sowie die Übergangsstrecke 3d von fünf Scharnierbandketten 7 gebildet sind. Ebenso wie bei den Ausführungen nach den Figuren 1, 2 und 4, 5 ist aber auch bei der Ausführung nach Figur 6 die Anzahl der die Übergangsstrecke und den Abförderer bildenden Scharnierbandketten 7 größer, und zwar bei den wiedergegebenen Beispielen um EINS größer als die Anzahl der den Zuförderer bildenden Scharnierbandketten 4. Eine Besonderheit der Ausführung nach Figur 6 besteht gegenüber der Ausführung nach den Figuren 4 und 5 darin, daß die Scharnierbandketten 7 und damit auch ihre oberen, die horizontalen Standflächen für die Behälter 5 bildenden Längen unter Verwendung nicht näher dargestellter Führungen im Anfangsbereich des Abförderers 2d in der horizontalen Ebene bogenförmig gekrümmt sind, so daß zwar die Übergangsstrecke 3d abgewinkelt an den Zuförderer 1d anschließt, d. H. die Förderrichtungen A des Zuförderers 1d und die Förderrichtung B der Übergangsstrecke 3d den bereits erwähnten Winkel a einschließen, der Abförderer 2d mit seiner Längserstreckung bzw. Förderrichtung A' jedoch parallel zur Längserstreckung bzw. Förderrichtung A des Zuförderers 1d liegt.

Allen vorbeschriebenen Ausführungen ist auch gemeinsam, daß der maximale Abstand x, den die oberen Längen benachbarter Scharnierbandketten 7 bzw. 12 voneinander am Beginn des Abförderers 2a, 2b, 2c bzw. 2d aufweisen, nicht nur wesentlich kleiner ist als der Durchmesser der Behälter 5 bzw.

deren Bodenflächen, sondern auch wesentlich kleiner ist als die Breite der Gassen 11.

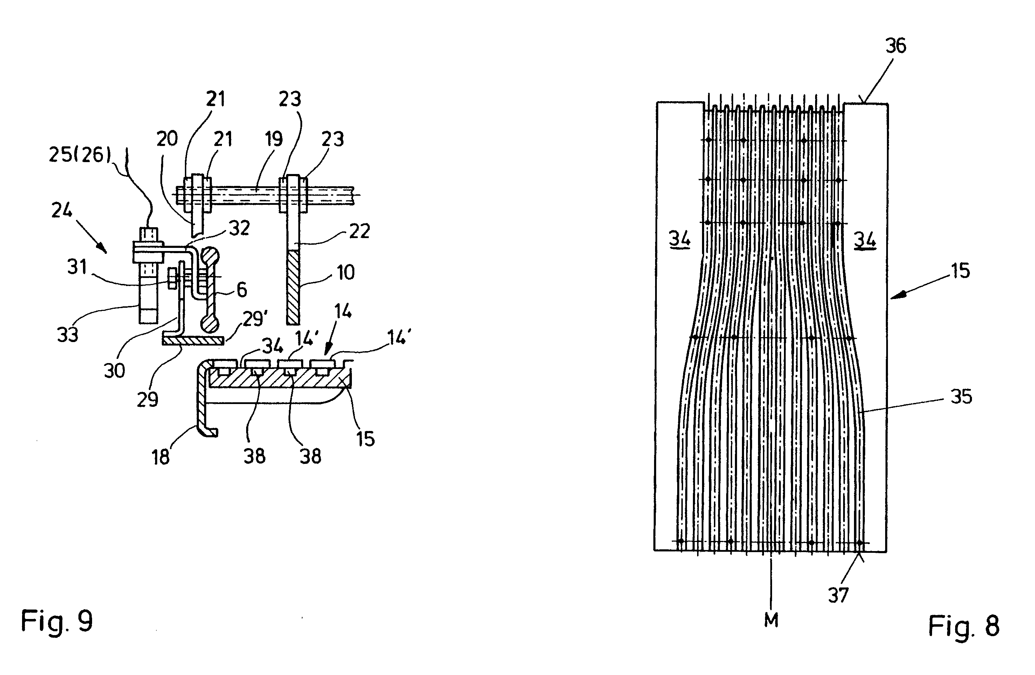

In den Fig. 7 bis 9 ist eine bevorzugte Ausführung dargestellt, bei der der Zuförderer 1e wiederum von fünf Scharnierbandketten 4 gebildet ist. Während bei den vorbeschriebenen Ausführungen die für den Zuförderer, den Abförderer sowie die Übergangsstrecke verwendeten Scharnierbandketten jeweils die gleiche Breite in Richtung senkrecht zur Förderrichtung aufweisen, sind bei der Ausführungsform nach den Fig. 7 bis 9 für den dortigen Abförderer 2e sowie für die dortige Übergangsstrecke 3e Scharnierbandketten 14 verwendet, die eine im Vergleich zu den Scharnierbandketten 4 wesentlich kleinere Breite besitzen. Entsprechend der Ausbildung der in der Fig. 8 dargestellten und weiter unten noch näher erläuterten Führungsplatte 15 für die Scharnierbandketten 14 bzw. deren obere Längen sind bei dieser Ausführungsform insgesamt zwölf Scharnierbandketten 14 vorgesehen, die wiederum in sich geschlossen und endlos umlaufend derart angetrieben sind, daß die die horizontalen Standflächen für die Behälter 5 bildenden oberen Längen der Scharnierbandketten 14 in Förderrichtung A des Zuförderers 1e, die auch die Förderrichtung der Übergangsstrecke 3e sowie des Abförderers 2e ist, umlaufen. Am Übergangsbereich zwischen dem Zuförderer 1e und der Übergangsstrecke 3e, d.h. unterhalb des dort wiederum vorgesehenen Staubleches 9 sind die Scharnierbandketten 14 über nicht näher dargestellte Umlenkräder bzw. -rollen geführt. In ähnlicher Weise sind die Scharnierbandketten 14 auch an dem in der Fig. 7 nicht mehr dargestellten Ende des Abförderers 2e über Umlenkrollen geführt, die durch einen ebenfalls nicht dargestellten Antrieb angetrieben werden.

Ähnlich wie die Scharnierbandketten 7 bei der Ausführung nach den Fig. 1 und 2 liegen auch die oberen Längen benachbarter Scharnierbandketten 14 am Übergangsbereich zwischen dem Zuförderer 1e und der Übergangsstrecke 3e quer zur Förderrichtung A unmittelbar nebeneinander, wobei die oberen Längen der Scharnierbandketten 14 dann im Anschluß an diesen Übergangsbereich symmetrisch zu der in Förderrichtung A verlaufenden Mittelachse der Übergangsstrecke 3e derart fächerartig auseinanderlaufen, daß der Abstand x', den die oberen Längen zweier benachbarter Scharnierbandketten 14 voneinander aufweisen, im Verlauf der Übergangsstrecke 3e und in Förderrichtung zunimmt. Die Scharnierbandketten 14 bilden mit ihren jeweils oberen Längen nicht nur die horizontale Standfläche für die Behälter 5 im Bereich der Übergangsstrecke 3e, sondern auch die Standflächen für die Behälter im Bereich des Abförderers 2e bzw. im Bereich der dortigen Gassen 11.

Hinsichtlich ihrer Arbeitsweise entspricht die Ausführung nach den Fig. 7 bis 9 wiederum der Ausführungsform nach den Fig. 1 und 2, d.h. der über den Zuförderer 1e angeförderte Behälterstrom, in welchem die Behälter 5 die in der Fig. 1 dargestellte Formation sowie bereits sechs vorgebildete Reihen in Förderrichtung aufweisen, wird nach dem Passieren des Staubleches 9 an der Übergangsstrecke 3e aufgelockert und durch den speziellen Verlauf, den die oberen Längen der Förderbänder 14 an der Übergangsstrecke 3e aufweisen, auch quer zur Förderrichtung A aufgespreizt, so daß die Behälter 5 in die einzelnen Gassen 11 des Förderers 2e einlaufen und sich dort zu den parallelen Behälterreihen formieren. Die maximalen Abstände x', die die oberen Längen benachbarter Scharnierbandketten 14 voneinander besitzen, sind wiederum wesentlich kleiner als der Durchmesser der Behälter 5 und auch wesentlich kleiner als die Breite der Gassen 11.

Da bei der Ausführungsform nach den Fig. 7 bis 9 die Standflächen für die Behälter im Bereich der Übergangsstrecke 3e sowie im Bereich des Abförderers 2e von den oberen Längen einer sehr großen Anzahl der sehr schmalen Scharnierbandketten 14 gebildet ist, hat die in den Fig. 7 bis 9 dargestellte Ausführung den besonderen Vorteil, daß ohne Beeinträchtigung der Funktion nicht nur die Förderbreite des Zuförderers 1e, sondern auch die Breite der Übergangsstrecke 3e sowie die Breite der Gassen 11 durch Einstellung der Führungsgeländer 6 sowie der Einteilwände 10 an den Durchmesser der Behälter 5 angepaßt werden können. Mit der Anordnung nach den Fig. 7 bis 9 können also Behälter 5 mit sehr unterschiedlichem Durchmesser verarbeitet werden.

Um die vorstehend erwähnte Einstellung der Führungsgeländer 6 zu erreichen, sind diese zunächst einmal an einem Maschinengestell 16 des Zuförderers 1e mit Hilfe von Einstellelementen 17 gehalten. Diese Einstellelemente 17 erlauben eine Einstellung des zugehörigen Führungsgeländers 6 in horizontaler Richtung sowie senkrecht zur Förderrichtung A, wie dies mit den Doppelpfeilen C angedeutet ist. Auch im Bereich des Abförderers 2e sind die äußeren Führungsgeländer 6 durch die Einstellelemente 17 in horizontaler Richtung und senkrecht zur Förderrichtung A einstellbar an dem für den Abförderer 2e und die Übergangsstrecke 3e gemeinsamen Maschinengestell 18 gehalten.

Zur einstellbaren Halterung der Einteilwände 10 dienen Gewindestangen 19, von denen am Abförderer wenigstens zwei vorgesehen sind und die jeweils mit ihrer Achse in horizontaler Richtung und senkrecht zur Förderrichtung A liegen. Die in Förderrichtung A gegeneinander versetzten Gewindestangen 19 sind in einem vertikalen Abstand über den oberen Längen der Scharnierbandketten 14 angeordnet, der größer ist als die Höhe der größten, zu verarbeitenden Behälter 5, so daß sich die Behälter 5 unbehindert unter den Gewindestangen 19 hindurchbewegen können. Jede Gewindestange 19 ist entsprechend der Fig. 9 beidendig an dem freien Ende eines Haltearmes 20 gehalten, der in vertikaler Richtung über das dortige Führungsgeländer 6 vorsteht und an diesem Führungsgeländer befestigt ist. Zur Halterung der Gewindestange 19 weist der jeweilige Haltearm 20 an seinem oberen, freien Ende eine Bohrung auf, durch die die Gewindestange 19 hindurchreicht. Durch zwei Muttern 21 ist jedes Ende jeder Gewindestange 19 an dem zugehörigen Haltearm 20 festgelegt. Die einzelnen Einteilwände 10 sind entsprechend der Fig. 9 hängend an den Gewindestangen 19 gehalten, und zwar dadurch, daß jede Einteilwand 10 für jede Gewindestange 19 einen über ihre obere Kante in vertikaler Richtung wegstehenden Haltearm 22 besitzt, der an seinem freien, oberen Ende eine Bohrung aufweist, durch die die zugehörige Gewindestange 19 hindurchgeführt ist. Die Fixierung der Haltearme 22 und damit der Einteilwände 10 an der jeweiligen Gewindestange 19 erfolgt wiederum durch zwei Muttern 23. Nach dem Lösen der Muttern 21 und 23 können die äußeren Führungsgeländer 6 mit Hilfe der Einstellelemente 17 und auch die Einteilwände 10 dem Durchmesser der zu verarbeitenden Behälter 5 entsprechend eingestellt werden. Nach jeder Einstellung werden die Muttern 21 und 23 wieder festgedreht.

Wie die Fig. 7 zeigt, sind an der Übergangsstrecke 3e zwei Staumelder 24 vorgesehen, und zwar jeweils ein derartiger Staumelder 24 an jedem äußeren Führungsgeländer 6 in Förderrichtung A mit einem gewissen Abstand vor dem Übergangsbereich zwischen der Übergangsstrecke 3e und dem nachfolgenden Abförderer 2e. Diese Staumelder 24 dienen dazu, um den Antriebsmotor 8 für die Scharnierbandketten 4 des Zuförderers 1e dann abzuschalten, wenn es wegen eines Überlaufens der Gassen 11 oder aber aus anderen Gründen zu einem Stau der Behälter 5 im Bereich der Übergangsstrecke 3e kommt. Die beiden Staumelder 24 sind jeweils über eine Leitung 25 bzw. 26 mit einer elektrischen Steuereinrichtung 27 verbunden, die über eine Steuerleitung 28 mit dem Antriebsmotor 8 verbunden ist und diesen dann abschaltet, wenn einer der beiden Staumelder 24 oder aber beide Staumelder 24 betätigt werden.

In der Fig. 9 ist einer der beiden Staumelder 24 mehr im Detail dargestellt. Er besteht im wesentlichen aus einer mit ihren Oberflächenseiten horizontal angeordneten Platte 29, die wenigstens einen über die Oberseite in vertikaler Richtung wegstehenden und an der Platte 29 befestigten Haltearm 30 aufweist, mit der die Platte 29 frei pendelnd an dem zugehörigen Führungsgeländer 6 gehalten ist. Der Haltearm 30, der hierfür an seinem oberen, freien Ende eine Bohrung aufweist, durch die der Schaft einer am Führungsgeländer 6 verankerten Halteschraube mit großem Spiel hindurchreicht, befindet sich außerhalb des von dem Führungsgeländer 6 begrenzten Bewegungsraumes der Behälter 5. Die Platte 29, die tiefer liegt als die untere, in Förderrichtung A verlaufende Kante des Führungsgeländers 6 reicht mit einem Randbereich 29' in diesen Bewegungsraum der Behälter 5 hinein, und zwar nur soweit, daß der Randbereich 29' im normalen Betrieb der Anordnung nicht mit den Behältern 5 in Berührung kommt. Außerhalb des von dem Führungsgeländer 6 begrenzten Bewegungsraumes der Behälter 5 ist mittels eines Halters 32 an dem Führungsgeländer 6 ein berührungslos arbeitender Signalgeber vorgesehen, der mit der Platte 29 bzw. mit dem aus Metall hergestelltem Haltearm 30 dieser Platte zusammenwirkt. Tritt im Bereich der Übergangsstrecke 3e aus den vorgenannten Gründen ein Behälterstau auf, so werden sich hierbei zwangsläufig einige Behälter auch nach außen derart bewegen, daß zumindest ein solcher Behälter gegen den Randbereich 29' der Platte 29 zur Anlage kommt und letztere nach außen schwenkt, so daß diese Platte bzw. der an ihr vorgesehene, aus Metall bestehende Haltearm 30 in den Wirkungsbereich des induktiven Signalgebers 33 gelangt, der dann über die Leitung 25 bzw. 26 ein Signal an die Steuereinrichtung 27 zur Abschaltung des Elektromotors 8 liefert. Hat sich der Behälterstau im Bereich der Übergangsstrecke 3e aufgelöst, so befinden sich beide Staumelder 24 wiederum in ihrer Ausgangslage, d.h. der Antriebsmotor 8 wird zum weiteren Anfördern der Behälter 5 wieder eingeschaltet.

Zur Führung der oberen Längen der Scharnierbandketten 14 an der Übergangsstrecke 3e sowie auch im Anfangsbereich des Abförderers 2e dient die Führungsplatte 15, die mit ihrer oberen, in einer horizontalen Ebene liegenden Fläche am Maschinengestell 18 unmittelbar unterhalb der oberen Längen der Scharnierbandketten 14 angeordnet ist, so daß die die einzelnen Glieder der Scharnierbandketten 14 bildenden Platten 14' auf dieser Fläche mit ihrer Unterseite aufliegend gleiten. In die Fläche 34 sind mehrere, d.h. bei der dargestellten Ausführungsform insgesamt zwölf Führungsnuten 35 eingebracht, die sich jeweils über die gesamte, in Förderrichtung A verlaufende Länge der Führungsplatte 15 erstrecken und senkrecht zu dieser Länge bzw. zu der Förderrichtung A nebeneinander angeordnet sind. Die Führungsnuten 35 sind weiterhin an den Querseiten 36 und 37 der Führungsplatte 15, die (Querseiten) senkrecht zur Förderrichtung A verlaufen und von denen sich die Querseite 36 am Übergangsbereich zwischen dem Zuförderer 1e und der Übergangsstrecke 3e und die Querseite 37 im Bereich des Übergangs zwischen der Übergangsstrecke 3e und dem Abförderer 2e befinden, offen. Der Verlauf der Führungsnuten 35 entspricht dem Verlauf, den die oberen Längen der Scharnierbandketten 14 im Bereich der Übergangsstrecke 3e sowie am Übergang zum Abförderer 2e aufweisen, d.h. der Mitte-Mitte-Abstand zweier benachbarter Führungsnuten 35 ist im Bereich der Querseite 36 in etwa gleich der Breite der Scharnierbandketten 14 bzw. der Breite, die die Platten 14' senkrecht zur Bewegungsrichtung der Scharnierbandketten 14 aufweisen, während im Bereich der Querseite 37 dieser Mitte-Mitte-Abstand zwischen zwei benachbarten Führungsnuten 35 um den Betrag x' größer ist als an der Querseite 36. Wie die Fig. 8 zeigt, weisen die Führungsnuten 35 auch den für den Verlauf der Scharnierbandketten 14 typischen, flachen S-förmigen Verlauf auf, wobei dieser Verlauf bei solchen Führungsnuten 35, die einen größeren Abstand von der in Förderrichtung A liegenden Mittelebene M der Führungsplatte 15 aufweisen, wesentlich stärker ausgeprägt ist als bei solchen Führungsnuten 35, die dieser Mittelebene M näherliegen. Für jede Scharnierbandkette 14 ist jeweils eine Führungsnut 35 vorgesehen, in die an der Unterseite der Platten 14' dieser Scharnierbandkette 14 vorgesehene und über die Unterseite vorstehende Führungselemente eingreifen. Letztere sind von den bei Scharnierbandketten an den einzelnen Platten 14' ohnehin vorgesehenen Ansätzen 38 gebildet, an denen die einzelnen Platten 14' zu der jeweiligen Scharnierbandkette 14 gelenkig miteinander verbunden sind. Um einen möglichst geräuscharmen Lauf der Scharnierbandketten 14 mit geringer Reibung zu erreichen, ist die Führungsplatte 15 aus einem harten Kunststoff hergestellt. Grundsätzlich ist es selbstverständlich auch möglich, die Führungsplatte 15 nur im Bereich der Führungsnuten 35 oder an den die Führungsnuten begrenzenden Rändern, auf denen die Platten 14' gleiten, aus Kunststoff zu fertigen.

## Patentansprüche

1. Anordnung zum Umformen eines mehrspurigen, dichtgepackten Behälterstromes in mehrere parallele, jeweils durch Einteilelemente voneinander getrennte Behälterreihen, deren Anzahl gleich der Anzahl des mehrspurigen Behälterstromes ist, mit einem zum Anfördern der Behälter dienenden Zuförderer (1a-1e), mit einem Abförderer (2a-2e), der durch die in seiner Förderrichtung verlaufenden parallel und in Abstand zueinander angeordneten Einteilelemente in mehrere Gassen für jeweils eine Behälterreihe unterteilt ist und eine im Vergleich zur Förderbreite des Zuförderers größere Breite besitzt, sowie mit einer dem Abförderer vorausgehenden Übergangsstrecke (3a-3e), die durch in Förderrichtung liegende obere Längen mehrerer quer zu dieser Förderrichtung nebeneinander angeordneter Förderbänder gebildet ist und in der die Behälter des mehrspurigen Behälterstromes auf die einzelnen Gassen verteilt werden,
dadurch gekennzeichnet,
daß im Verlauf der Übergangsstrecke (3a, 3b, 3c, 3d, 3e) die diese bildenden Förderbänder (7, 12, 14) fächerartig derart auseinanderlaufen, daß der seitliche Abstand (x, x') zwischen den oberen Längen benachbarter Förderbänder (7, 12, 14) mit zunehmendem Abstand von dem Zuförderer (1a, 1b, 1c, 1d, 1e) zunimmt, und daß der maximale Wert dieser Abstände (x, x') jedoch jeweils kleiner ist als der Durchmesser der Behälter (5) bzw. die Breite der am Abförderer (2a, 2b, 2c, 2d, 2e) gebildeten Gassen.

2. Anordnung nach Anspruch 1, dadurch gekennzeichnet, daß die die Übergangsstrecke (3a, 3b, 3c, 3d, 3e) bildenden Förderbänder (7, 12, 14) spiegelsymmetrisch zu der in Förderrichtung (A, B) verlaufenden Mittelachse der Übergangsstrecke (3a, 3b, 3c, 3d, 3e) fächerartig auseinanderlaufen.

3. Anordnung nach Anspruch 1 oder 2, dadurch gekennzeichnet, daß die die Übergangsstrecke (3b) bildenden Förderbänder (12) zugleich auch die Förderbänder des Zuförderers (1b) sind.

4. Anordnung nach Anspruch 3, dadurch gekennzeichnet, daß die die Übergangsstrecke (3b) bildenden Förderbänder (12) zugleich auch die Förderbänder des Abförderers (2b) sind.

5. Anordnung nach Anspruch 1 oder 2, dadurch gekennzeichnet, daß die Förderbänder (7, 14) der Übergangsstrecke (3a, 3c, 3d, 3e) von dem Zuförderer unabhängige Förderbänder sind.

6. Anordnung nach Anspruch 5, dadurch gekennzeichnet, daß die die Übergangsstrecke (3a, 3c, 3d, 3e) bildenden Förderbänder (7, 14) zugleich auch die Förderbänder des Abförderers (2a, 2c, 2d, 2e) sind.

7. Anordnung nach Anspruch 5 oder 6, dadurch gekennzeichnet, daß der Zuförderer (1a, 1c, 1d, 1e) von mehreren, quer zur Förderrichtung (A) nebeneinander angeordneten Förderbändern (4) gebildet ist, und daß die Anzahl der die Übergangsstrecke (3a, 3c, 3d, 3e) bildenden Förderbänder (7, 14) größer ist als die Anzahl der Förderbänder (4) des Zuförderers (1a, 1c, 1d, 1e).

8. Anordnung nach einem der Ansprüche 5 bis 7, dadurch gekennzeichnet, daß der Zuförderer (1a, 1c, 1d, 1e) von mehreren Förderbändern (4) gebildet ist, und daß diese die gleiche Breite aufweisen wie die die Übergangsstrecke (3a, 3c, 3d, 3e) bildenden Förderbänder (7, 14).

9. Anordnung nach Anspruch 7, dadurch gekennzeichnet, daß die die Übergangsstrecke (3e) bildenden Förderbänder (14) wesentlich schmäler sind als die Förderbänder (4) des Zuförderers (1e).

10. Anordnung nach Anspruch 9, dadurch gekennzeichnet, daß das Verhältnis der Breite der Förderbänder des Zuförderers (1e) zu der Breite der Förderbänder (14) der Übergangsstrecke (3e) wenigstens gleich Zwei, vorzugsweise jedoch größer als Zwei ist.

11. Anordnung nach einem der Ansprüche 1 bis 10, dadurch gekennzeichnet, daß im Bereich der Übergangsstrecke (3e) für die obere Länge jedes Förderbandes (14) eine Führung (35) vorgesehen ist, in der Führungsansätze (38) des jeweiligen Förderbandes (14) gleitend geführt sind.

12. Anordnung nach Anspruch 11, dadurch gekennzeichnet, daß bei Ausbildung der die Übergangsstrecke (3e) bildenden Förderbänder als Scharnierbandketten (14) die in den Führungen geführten Ansätze von denjenigen Ansätzen (38) an den Platten (14') der Scharnierbandketten (14) gebildet sind, an denen diese Platten (14') gelenkig zu der jeweiligen Scharnierbandkette (14) miteinander verbunden sind.

13. Anordnung nach Anspruch 11 oder 12, dadurch gekennzeichnet, daß die Führungen von Führungsnuten (35) gebildet sind, die in oder an einer unter den oberen Längen der Förderbänder (14) angeordneten Führungsplatte (15) vorgesehen sind.

14. Anordnung nach einem der Ansprüche 1 bis 13, dadurch gekennzeichnet, daß im Übergangs- bzw. Anschlußbereich zwischen dem Zuförderer (1a, 1c, 1d, 1e) und der Übergangsstrecke (3a, 3c, 3d, 3e) ein ortsfestes Staublech (9, 13) vorgesehen ist, welches mit seiner Oberseite eine sich an den Zuförderer (1a, 1c, 1d, 1e) anschließende und der Übergangsstrecke (3a, 3c, 3d, 3e) vorausgehende ortsfeste Standfläche für die Behälter (5) bildet.

15. Anordnung nach Anspruch 14, dadurch gekennzeichnet, daß die in Förderrichtung (A) des Zuförderers (1a, 1c, 1d, 1e) hintere Kante (9″, 13″) des Staubleches (9, 13) im wesentlichen senkrecht zur Förderrichtung (A, B) der Übergangsstrecke (3a, 3c, 3d, 3e) liegt.

16. Anordnung nach Anspruch 14, dadurch gekennzeichnet, daß die in Förderrichtung (A) des Zuförderers (1a) hintere Kante des Staubleches (9) von wenigstens einem Abschnitt (9‴, 9⁗) gebildet ist, der schräg zur Förderrichtung (A) der Übergangsstrecke (3a) verläuft.

17. Anordnung nach Anspruch 16, dadurch gekennzeichnet, daß die hintere Kante des Staubleches (9) von zwei jeweils schräg zur Förderrichtung (A) verlaufenden Abschnitten (9‴, 9⁗) gebildet ist, die im Bereich der in Förderrichtung (A) verlaufenden Mittelachse der Übergangsstrecke (3a) aneinander anschließen und einen Winkel zwischen sich bilden, der sich entgegen der Förderrichtung (A) oder in Förderrichtung (A) öffnet.

18. Anordnung nach einem der Ansprüche 1 bis 17, dadurch gekennzeichnet, daß die die Übergangsstrecke (3e) bildenden Förderbänder (14) eine Breite aufweisen, die wesentlich kleiner ist als der Durchmesser der Behälter (5) bzw. die Breite der am Abförderer (2e) gebildeten Gassen (11).

19. Anordnung nach Anspruch 18, dadurch gekennzeichnet, daß die Breite der am Abförderer (2e) gebildeten Gassen (11) wenigstens um den Faktor Zwei größer ist als die Breite der die Übergangsstrecke (3e) bildenden Förderbänder (14).

20. Anordnung nach einem der Ansprüche 1 bis 19, dadurch gekennzeichnet, daß die Breite des Zuförderers (1a), die Breite der Übergangsstrecke (3e) sowie die Breite der am Abförderer (2e) gebildeten Gassen (11) einstellbar sind.

21. Anordnung nach einem der Ansprüche 1 bis 20, dadurch gekennzeichnet, daß an wenigstens einer Seite der Übergangsstrecke (3e) ein Stau-Melder (24) vorgesehen ist, welcher bei einem an der Übergangsstrecke (3e) auftretenden Behälterstau ein Signal zum Abschalten des Zuförderers (1e) abgibt.

22. Anordnung nach einem der Ansprüche 1 bis 21, dadurch gekennzeichnet, daß die Übergangsstrecke (3a, 3b, 3e) so an den Zuförderer (1a, 1b, 1e) anschließt, daß die Förderrichtung der Übergangsstrecke gleich der Förderrichtung (A) des Zuförderers ist.

23. Anordnung nach einem der Ansprüche 1 bis 21, dadurch gekennzeichnet, daß die Übergangsstrecke (3c, 3d) so an den Zuförderer (1c, 1d) anschließt, daß die Förderrichtung (B) der Übergangsstrecke mit der Förderrichtung (A) des Zuförderers einen Winkel einschließt.

24. Anordnung nach einem der Ansprüche 1 bis 23, dadurch gekennzeichnet, daß der Abförderer (2e) in seinem auf die Übergangsstrecke (3d) folgenden Eingangsbereich gekrümmt ausgebildet ist.

**Claims**

1. Arrangement for transforming a multiple track, tightly packed container stream into several parallel container rows, which are separated from one another by dividing elements and the number of which is equal to the number of the multiple track container stream, with an inward conveyor (1a to 1e), which serves for the inward conveying of the containers, with an outward conveyor (2a to 2e), which is subdivided into several lanes each for a respective container row by the dividing elements, which extend in its conveying direction and are arranged parallelly to and at a spacing from one another, and which has a width that is greater in comparison with the conveying width of the inward conveyor, as well as with a transition section (3a to 3e), which precedes the outward conveyor, is formed by the upper lengths lying in the conveying direction of several conveyor belts, which are arranged one beside the other and transversely to this conveying direction, and in which the containers of the multiple track container stream are divided over the individual lanes, characterised thereby, that the conveyor belts (7, 12, 14) forming the transition section (3a, 3b, 3c, 3d, 3e) diverge like a fan in the course thereof in such a manner that the lateral spacing (x, x') between the upper lengths of neighbouring conveyor belts (7, 12, 14) increases with increasing spacing from the inward conveyor (1a, 1b, 1c, 1d, 1e) and that the maximum value of these spacings (x, x') however is each time smaller than the diameter of the containers (5) or the width of the lanes formed at the outward conveyor (2a, 2b, 2c, 2d, 2e).

2. Arrangement according to claim 1, characterised thereby, that the conveyor belts (7, 12, 14) forming the transition section (3a, 3b, 3c, 3d, 3e) diverge like a fan in mirror symmetry to the centre line, which extends in the conveying direction, of the transition section (3a, 3b, 3c, 3d, 3e).

3. Arrangement according to claim 1 or 2, characterised thereby, that the conveyor belts (12) forming the transition section (3b) are at the same time also the conveyor belts of the inward conveyor (1b).

4. Arrangement according to claim 3, characterised thereby, that the conveyor belts (12) forming the transition section (3b) are at the same time also the conveyor belts of the outward conveyor (2b).

5. Arrangement according to claim 1 or 2, characterised thereby, that the conveyor belts (7, 14) of the transition section (3a, 3c, 3d, 3e) are conveyor belts independent of the inward conveyor.

6. Arrangement according to claim 5, characterised thereby, that the conveyor belts (7, 14) forming the transition section (3a, 3c, 3d, 3e) are at the same time also the conveyor belts of the outward conveyor (2a, 2c, 2d, 2e).

7. Arrangement according to claim 5 or 6, characterised thereby, that the inward conveyor (1a, 1c, 1d, 1e) is formed by several conveyor belts (4) arranged one beside the other transversely to the conveying direction (A) and that the number of the conveyor belts (7, 14) forming the transition section (3a, 3c, 3d, 3e) is greater than the number of the conveyor belts (4) of the inward conveyor (1a, 1c, 1d, 1e).

8. Arrangement according to one of the claims 5 to 7, characterised thereby, that the inward conveyor (1a, 1c, 1d, 1e) is formed by several conveyor belts (4) and that these display the same width as the conveyor belts (7, 14) forming the transition section (3a, 3c, 3d, 3e).

9. Arrangement according to claim 7, characterised thereby, that the conveyor belts (14) forming the transition section (3e) are substantially narrower than the conveyors belts (4) of the inward conveyor (1e).

10. Arrangement according to claim 9, characterised thereby, that the ratio of the width of the conveyor belts of the inward conveyor (1e) to the width of the conveyor belts (14) of the transition section (3e) is at least equal to two, preferably however greater than two.

11. Arrangement according to one of the claims 1 to 10, characterised thereby, that a guide (35) is provided for the upper length of each conveyor belt (14) in the region of the transition section (3e), in which guide projections (38) of the respective conveyor belt (14) are slidingly guided.

12. Arrangement according to claim 11, characterised thereby, that in the case of the construction of the conveyor belts forming the transition section (3e) as link chain belts (14), the projections guided in the guides are formed by those projections (38) at the plates (14') of the link chain belts (14) at which these plates (14') are articulatedly connected with one another into the respective link chain belt (14).

13. Arrangement according to claim 11 or 12, characterised thereby, that the guides are formed by guide grooves (35), which are arranged in or at a guide plate (15) arranged below the upper lengths of the conveyor belts (7, 12, 14).

14. Arrangement according to one of the claims 1 to 13, characterised thereby, that a fixedly located metal barrier plate (9, 13), which by its upper side forms a fixedly located support surface for the containers (5), which adjoins the inward conveyor (1a, 1c, 1d, 1e) and precedes the transition section (3a, 3c, 3d, 3e), is provided in the transition or connecting region between the inward conveyor (1a, 1c, 1d, 1e) and the transition section (3a, 3c, 3d, 3e).

15. Arrangement according to claim 14, characterised thereby, that edge (9", 13") of the metal barrier plate (9, 13), which is rearward in the conveying direction (A) of the inward conveyor (1a, 1c, 1d, 1e), lies substantially perpendicularly to the conveying direction (A, B) of the transition section (3a, 3c, 3d, 3e).

16. Arrangement according to claim 14, characterised thereby, that the edge of the metal barrier plate (9), which is rearward in the conveying direction (A) of the inward conveyor (1e), is formed by at least one portion (9''', 9""), which extends obliquely to the conveying direction (A) of the transition section (3e).

17. Arrangement according to claim 16, characterised thereby, that the rear edge of the metal barrier plate (9) is formed by two portions (9''', 9''''), which each extend obliquely to the conveying direction (A), adjoin one the other in the region of the centre line, extending in the conveying direction (A), of the transition section (3a) and which between them form an angle which is open against the conveying direction (A) or in the conveying direction (A).

18. Arrangement according to one of the claims 1 to 17, characterised thereby, that the conveyor belts (14) forming the transition section (3e) display a width which is substantially smaller than the diameter of the containers (5) or the width of the lanes (11) formed at the outward conveyor (2e).

19. Arrangement according to claim 18, characterised thereby, that the width of the lanes (11) formed at the outward conveyor (2e) is greater by at least a factor of two than the width of the conveyor belts (14) forming the transition section (3e).

20. Arrangement according to one of the claims 1 to 19, characterised thereby, that the width of the inward conveyor (1a), the width of the transition section (3e) as well as the width of the lanes (11) formed at the outward conveyor (2e) are adjustable.

21. Arrangement according to one of the claims 1 to 20, characterised thereby, that an accumulation-reporting device (24), which in the case of an accumulation of containers occurring at the transition section (3e) delivers a signal for the switching-off of the inward conveyor (1e), is provided at at least one side of the transition section (3e).

22. Arrangement according to one of the claims 1 to 21, characterised thereby, that the transition section (3a, 3b, 3e) so adjoins the inward conveyor (1a, 1b, 1e) that the conveying direction of the transition section is the same as the conveying direction (A) of the inward conveyor.

23. Arrangement according to one of the claims 1 to 21, characterised thereby, that the transition section (3c, 3d) so adjoins the inward conveyor (1c, 1d) that the conveying direction (B) of the transition section includes an angle with the conveying direction (A) of the inward conveyor.

24. Arrangement according to one of the claims 1 to 23, characterised thereby, that the outward conveyor (2e) is constructed to be curved in its entry region following the transition section (3d).

## Revendications

1. Dispositif pour transformer un courant de récipients, étroitement serrés sur plusieurs rangées, en plusieurs files parallèles de récipients, respectivement séparées les unes des autres par des éléments de division, récipients dont le nombre est égal à celui du courant de récipients sur plusieurs rangées, dispositif comportant un transporteur d'amenée (1a-1e) servant à amener les récipients, ainsi qu'un transporteur de départ (2a-2e) qui, par les éléments de division disposés parallèlement à sa direction de transport et à une certaine distance les uns des autres, est divisé en plusieurs voies pour, respectivement, une file de récipients et qui possède une plus grande largeur en comparaison de la largeur de transport du transporteur d'amenée, et comportant aussi une longueur de transition (3a-3e) qui précède le transporteur de départ, qui est formée par les brins supérieurs, situés dans la direction de transport, de plusieurs tapis transporteurs disposés les uns à côté des autres perpendiculairement à cette direction du transport, et dans laquelle les récipients du courant de récipients sur plusieurs rangées se répartissent sur les différentes voies, dispositif caractérisé par le fait que, sur le parcours de la longueur de transition (3a, 3b, 3c, 3d, 3e), les tapis transporteurs (7, 12, 14) qui forment cette longueur s'écartent les uns des autres à la façon d'un éventail de façon que la distance latérale (x, x') entre les brins supérieurs de tapis transporteurs (7, 12, 14) voisins augmente lorsque croît la distance par rapport au transporteur d'amenée (1a, 1b, 1c, 1d, 1e), et par le fait que la valeur maximale de ces distances (x, x') est pourtant respectivement inférieure au diamètre des récipients (5) ou à la largeur des voies formées sur le transporteur de départ (2a, 2b, 2c, 2d, 2e).

2. Dispositif selon la revendication 1, caractérisé par le fait que les tapis transporteurs (7, 12, 14) formant la longueur de transition (3a, 3b, 3c, 3d, 3e) s'écartent les uns des autres à la façon d'un éventail, symétriquement par rapport à l'axe médian, orienté dans la direction du transport (A, B), de la longueur de transition (3a, 3b, 3c, 3d, 3e).

3. Dispositif selon la revendication 1 ou 2, caractérisé par le fait que les tapis transporteurs (12), formant la longueur de transition (3b), sont également les tapis transporteurs du transporteur d'amenée (1b).

4.  Dispositif selon la revendication 3, caractérisé par le fait que les tapis transporteurs (12), formant la longueur de transition (3b), sont en même temps les tapis transporteurs du transporteur de départ (2b).

5.  Dispositif selon la revendication 1 ou 2, caractérisé par le fait que les tapis transporteurs (7, 14) de la longueur de transition (3a, 3c, 3d, 3e) sont des tapis transporteurs indépendants du transporteur d'amenée.

6.  Dispositif selon la revendication 5, caractérisé par le fait que les tapis transporteurs (7, 14) formant la longueur de transition (3a, 3c, 3d, 3e) sont également les tapis transporteurs du transporteur de départ (2a, 2c, 2d, 2e).

7.  Dispositif selon la revendication 5 ou 6, caractérisé par le fait que le transporteur d'amenée (1a, 1c, 1d, 1e) est formé de plusieurs tapis transporteurs (4), disposés les uns à côté des autres perpendiculairement à la direction du transport (A), et par le fait que le nombre des tapis transporteurs (7, 14) formant la longueur de transition (3a, 3c, 3d, 3e) est supérieur au nombre des tapis transporteurs (4) du transporteur d'amenée (1a, 1c, 1d, 1e).

8.  Dispositif selon l'une des revendications 5 à 7, caractérisé par le fait que le transporteur d'amenée (1a, 1c, 1d, 1e) est formé de plusieurs tapis transporteurs (4) et par le fait que ceux-ci présentent la même largeur que les tapis transporteurs (7, 14) qui forment la longueur de transition (3a, 3c, 3d, 3e).

9.  Dispositif selon la revendication 7, caractérisé par le fait que les tapis transporteurs (14) formant la longueur de la transition (3e) sont sensiblement plus étroits que les tapis transporteurs (4) du transporteur d'amenée (1e).

10. Dispositif selon la revendication 9, caractérisé par le fait que le rapport entre la largeur du tapis transporteur du transporteur d'amenée (1e) et la largeur du tapis transporteur (14) de la longueur de transition (3e) est au moins égal à deux, de préférence pourtant supérieur à deux.

11. Dispositif selon l'une des revendications 1 à 10, caractérisé par le fait que, dans la zone de la longueur de transition (3e) est prévu, pour le brin supérieur de chaque tapis transporteur (14), un guidage (35), dans lequel sont guidés, en glissant, des doigts de guidage (38) du tapis transporteur respectif (14).

12. Dispositif selon la revendication 11, caractérisé par le fait que, lorsque les tapis transporteurs formant la longueur de transition (3e) sont conçus sous forme de chaînes à tapis sur charnières (14), les doigts guidés dans les guidages sont formés par les doigts (38) prévus sur les plaques (14') des chaînes à tapis sur charnières (14), doigts par lesquels ces plaques (14') réunies les unes aux autres avec articulation pour former la chaîne à tapis sur charnières (14) respective.

13. Dispositif selon la revendication 11 ou 12, caractérisé par le fait que les guidages sont formés par des rainures de guidage (35), qui sont prévues dans ou sur une plaque de guidage (15) disposée sous les brins supérieurs des tapis transporteurs (14).

14. Dispositif selon l'une des revendications 1 à 13, caractérisé par le fait que, dans la zone de transition ou de raccordement entre le transporteur d'amenée (1a, 1c, 1d, 1e) et la longueur de transition (3a, 3c, 3d, 3e) est prévue une tôle tampon fixe (9, 13) qui, par sa face supérieure, forme une surface d'appui fixe, qui se raccorde au transporteur d'amenée (1a, 1c, 1d, 1e) et précède la longueur de transition (3a, 3c, 3d, 3e).

15. Dispositif selon la revendication 14, caractérisé par le fait que le bord arrière (9", 13"), dans la direction de transport (A) du transport d'amenée (1a, 1c, 1d, 1e), de la tôle tampon (9, 13) est disposé sensiblement perpendiculairement à la direction de transport (A, B) de la longueur de transition (3a, 3c, 3d, 3e).

16. Dispositif selon la revendication 14, caractérisé par le fait que le bord arrière, dans la direction du transport (A) du transporteur d'amenée (1a), de la tôle tampon (9) est formé d'au moins un tronçon (9"', 9"") qui est orienté obliquement par rapport à la direction de transport (A) de la longueur de transition (3a).

17. Dispositif selon la revendication 16, caractérisé par le fait que le bord arrière de la tôle tampon (9) est formé de deux tronçons (9"', 9""), qui sont respectivement orienté obliquement par rapport à la direction de transport (A), qui se raccordent l'un à l'autre dans la zone de l'axe médian, orienté dans la direction de transport (A), de la longueur de transition (3a) et forment entre eux un angle qui s'ouvre dans la direction opposée à la direction de transport (A) ou dans la direction de transport (A).

18. Dispositif selon l'une des revendications 1 à 17, caractérisé par le fait que les tapis transporteurs (14) formant la longueur de transition (3e) présentent une largeur qui est sensiblement inférieure au diamètre des récipients (5) ou à la largeur des voies (11) formées sur le transporteur de départ (2e).

19. Dispositif selon la revendication 18, caractérisé par le fait que la largeur des voies (11) formées sur le transporteur de départ (2e) est au moins deux fois plus grande que la largeur des tapis transporteurs (14) formant la longueur de transition (3e).

20. Dispositif selon l'une des revendications 1 à 19, caractérisé par le fait que sont réglables la largeur du transporteur d'amenée (1a), la largeur de la longueur de transition (3e) ainsi que la largeur des voies (11) formées sur le transporteur de départ (2e).

21. Dispositif selon l'une des revendications 1 à 20, caractérisé par le fait que, sur au moins un côté de la longueur de transition (3e) est prévu un indicateur d'encombrement (24) qui, en cas d'encombrement des récipients arrivant sur la longueur de transition (3e), émet un signal pour mettre hors circuit le transporteur d'amenée (1e).

22. Dispositif selon l'une des revendications 1 à 21, caractérisé par le fait que la longueur de transition (3a, 3b, 3e) se raccorde au transporteur d'amenée (1a, 1b,, 1e) de façon telle que la direction de transport de la longueur de transition est identique à la direction de transport (A) du transporteur d'amenée.

23. Dispositif selon l'une des revendications 1 à 21, caractérisé par le fait que la longueur de transition (3c, 3d) se raccorde au transporteur d'amenée (1c, 1d) de façon telle que la direction de transport (B) de la zone de transition se raccorde sous un certain angle avec la direction de transport (A) du transporteur d'amenée.

24. Dispositif selon l'une des revendications 1 à 23, caractérisé par le fait que le transporteur de départ (2e) est conçu incurvé dans sa zone d'entrée, qui vient à la suite de la longueur de transition (3d).

Fig. 4

Fig. 1

Fig. 2

Fig. 3

# Fig. 6

# Fig. 5

Fig.7

Fig. 8

Fig. 9